(19) Europäisches Patentamt
European Patent Office
Office européen des brevets

(11) Publication number: 0 237 306 A2

# (12) EUROPEAN PATENT APPLICATION

(21) Application number: 87301993.9

(22) Date of filing: 09.03.87

(51) Int. Cl.[4]: C 08 L 67/02
C 08 L 51/04, C 08 L 69/00

(30) Priority: 10.03.86 US 837998

(43) Date of publication of application:
16.09.87 Bulletin 87/38

(84) Designated Contracting States:
AT BE CH DE ES FR GB GR IT LI LU NL SE

(71) Applicant: CELANESE ENGINEERING RESINS, INC.
26 Main Street
Chatham, New Jersey (US)

(72) Inventor: Baum, Gerald A.
337 McKinley Boulevard
Paramus New Jersey (US)

Golder, Michael D.
38 Harreton Road
Allendale New Jersey (US)

(74) Representative: De Minvielle-Devaux, Ian Benedict Peter et al
CARPMAELS & RANSFORD 43, Bloomsbury Square
London WC1A 2RA (GB)

## (54) Semi-rigid thermoplastic polyester compositions.

(57) Thermoplastic polyester molding compositions containing poly($C_2$-$C_4$ alkylene terephthalate), segmented thermoplastic copolyester elastomer and impact modifier. The impact modifier is core-shell polymer having a core polymerized from butadiene and an outer shell polymerized from vinyl monomer and crosslinking agent.

EP 0 237 306 A2

## Description

## SEMI-RIGID THERMOPLASTIC POLYESTER COMPOSITIONS

### BACKGROUND OF THE INVENTION

The invention relates to improvements in thermoplastic molding compositions which comprise blends of poly($C_2$-$C_4$ alkylene terephthalate) and segmented thermoplastic copolyester elastomer.

Blends of polybutylene terephthalate (PBT) and thermoplastic copolyester elastomer are known and are described for instance in U.S. patents 4,469,851 and 3,907,926. Such blends are satisfactory for many end uses but do not have the desired mechanical properties for other end uses. The manufacture of certain automobile parts for instance requires molding compositions capable of producing high impact, semi-rigid materials having flexural moduli significantly below the normal flexural moduli of blends of the type described in the above mentioned U.S. patents, while at the same time having an improved impact strength with respect to such blends both at room and low temperature.

Impact modifiers are widely used in polyalkylene terephthalate molding compositions. U.S. patent 4,096,202 for instance discloses the use of impact modifier which is core-shell polymer having a first elastomeric phase polymerized from a monomer system including $C_1$-$C_6$ alkylacrylate as well as crosslinking and graftlinking monomers and having a final rigid thermoplastic phase polymerized in the presence of the elastomeric phase. Impact modifiers which are core-shell polymers polymerized from monomers comprising butadiene are also known for use with polyalkylene terephthalates such as PBT and are disclosed for instance in U.S. patents 4,180,494 and 3,864,428. U.S. patent 4,200,567 discloses an impact modifier system for poly($C_2$-$C_8$ alkylene terephthalates) which contain segmented copolyester elastomer and core shell polymer in which the core may be butadiene and the shell is rigid, thermoplastic polymer.

### SUMMARY OF THE INVENTION

It is accordingly an object of the invention to provide improved thermoplastic molding compositions. As compared with known prior art compositions the compositions of the invention have improved mechanical properties, including improved impact strengths and flex moduli.

Improved molding compositions of the invention consist essentially of:

(a) between about 10 wt. % and about 90 wt. % poly($C_2$-$C_4$ alkylene terephthalate) with at least about 50 wt. % of such poly($C_2$-$C_4$ alkylene terephthalate) being polybutylene terephthalate having an intrinsic viscosity between about 0.5 and about 2.0 dl/g;

(b) between about 10 wt. % and about 90 wt. % based on (a) and (b) of segmented thermoplastic copolyester elastomer which consists essentially of a multiplicity of recurring long chain ester units and short chain ester units joined head to tail through ester linkages, said long chain ester units being represented by the formula

$$-OGO-\overset{O}{\overset{\|}{C}}R\overset{O}{\overset{\|}{C}}- \quad \text{Formula I}$$

and said short chain ester units being represented by the formula

$$-ODO-\overset{O}{\overset{\|}{C}}R\overset{O}{\overset{\|}{C}}- \quad \text{Formula II}$$

where G is a divalent radical remaining after the removal of the terminal hydroxyl groups from a difunctional polyether glycol having a number average molecular weight in the range from about 400 to about 6,000, R is a hydrocarbon radical remaining after removal of the carboxyl groups from terephthalic acid or isophthalic acid, and D is a divalent radical remaining after removal of hydroxyl groups from 1,4 butanediol or 1,4 butenediol; provided that said short chain segments amount to between about 30 wt. % and about 85 wt. %, preferably 45-65% by weight, of the copolyester; and

(c) between about 5 wt. % and about 45 wt. % based on (a), (b) and (c) of impact modifier consisting essentially of butadiene based core-shell polymer having a butadiene polymer core, wherein butadiene units account for at least 50 mole % of the total polymer and the outer shell consists essentially of crosslinked vinyl monomer.

In preferred embodiments of the invention the poly($C_2$-$C_4$ alkylene terephthalate) comprises at least about 30 wt. % of the total composition and PBT comprises between about 20 wt. % and about 70 wt. % of (a), (b) and (c).

In other preferred embodiments of the invention, R is a hydrocarbon radical remaining after removal of carboxyl groups from terephthalic acid or from a mixture of terephthalic acid and isophthalic acid containing between about 1 and about 20% isophthalic acid based on the total of terephthalic acid and isophthalic acid and G is a divalent radical remaining after removal of terminal hydroxyl groups from poly(tetramethylene oxide) glycol.

Preferred butadiene based core-shell polymers are of the MBS type having a butadiene based rubbery core (first stage), a second stage polymerized from styrene and crosslinked acrylate outer shell (final stage).

In an especially preferred embodiment of the invention, between about 10% and about 40% of the D groups,

more preferably between about 20% and about 30%, represent divalent radicals remaining after removal of hydroxyl groups from l,4 butenediol.

DETAILED DESCRIPTION OF THE INVENTION

As noted above, compositions of the invention include poly($C_2$-$C_4$ alkylene terephthalate), segmented thermoplastic copolyester elastomer and core-shell type impact modifier. As noted at least about 50 wt. % of the alkylene terephthalate must be polybutylene terephthalate (PBT). The remainder may include polyethylene or polypropylene terephthalate.

PBT used in the invention may be produced in any suitable manner such as by reacting terephthalic acid or a dialkyl ester of terephthalic acid, e.g., dimethyl terephthalate, with diols having four carbon atoms, e.g., tetramethylene glycol. PBT for use in the invention has an intrinsic viscosity (I.V.) between about 0.5 and about 2.0 deciliters per gram (dl/g) as measured in orthochlorophenol at 25° C., with material having an I.V. between about 0.5 and about l.3 dl/g being preferred. Manufacture of PBT is well known to those skilled in the art as are the techniques for obtaining PBT of desired intrinsic viscosity. Such conventional production techniques for PBT are discussed in greater detail, for instance in U.S. patent No. 2,465,3l9. Polypropylene terephthalate (PPT) or polyethylene terephthalate (PET) when used may also be produced by any suitable conventional methods.

PBT is preferably present in compositions of the invention in amounts between about 20 wt. % and about 70 wt. % based on the total of poly(alkylene terephthalate), copolyester elastomer and impact modifier, and more preferably in amounts between about 30 wt. % and about 50 wt. % on the same basis.

Butadiene-type core-shell polymers suitable for use in compositions of the invention are graft copolymers formed between a butadiene polymer core whose butadiene units account for at least 50 mole % of the total polymer and at least one crosslinked vinyl monomer such as a derivative of acrylic or methacrylic acid. In preferred embodiments more than one vinyl monomer is grafted to the butadiene rubber; for example a preferred copolymer is a three-stage polymer having a butadiene based rubbery core, a second-stage polymerized from styrene and a crosslinked final stage or shell polymerized from methylmethacrylate and l,3-butylene glycol dimethacrylate. U.S. patent 3,864,428, the disclosure of which is incorporated herein by reference, describes suitable core-shell graft copolymers in more detail. Polymers of the '428 patent do not however have crosslinked outer shells (final stages) as required for use in the present invention. The outer shell of core-shell polymers for use in the invention is crosslinked with about 0.l to about 5 weight percent (wt. %) of a suitable crosslinking monomer. Suitable crosslinking monomers include poly acrylic and poly methacrylic esters of polyols such as butylene diacrylate and dimethacrylate, trimethylol propane trimethacrylate, di- and trivinyl benzene, vinyl acrylate and methacrylate, and the like. Preferred crosslinking monomers are butylene diacrylate or l,3 butylene glycol dimethacrylate. The use of crosslinking monomer results in a semi-rigid outer shell which, unlike the outer shell of the interpolymers described in U.S. patent 4,200,567, is thermosetting and not thermoplastic. Butadiene-type core-shell polymer used in the present invention can be produced by any known means such as a bulk polymerization, suspension polymerization, bulk-suspension polymerization, solution polymerization or emulsion polymerization. The use of the emulsion polymerization technique is recommended. In the production of graft polymer, a homo- or co-polymer of the vinyl monomer may be formed in the reaction product, but the reaction product as such may be used as the graft co-polymer.

Butadiene type core-shell modifiers suitable for use in compositions of the invention are available for instance from Rohm and Haas company under the tradename Paraloid KM-653 and from M & T Chemicals under the designation Metablen C-223.

Impact modifiers of the type described above are used in compositions of the invention in amounts between about 5 and about 45 wt. % based on the total of poly($C_2$-$C_4$ alkylene terephthalate), segmented copolyester elastomer and core-shell type impact modifier and more preferably in amounts between about 5 and about 35 wt. % on the same basis.

The long chain ester units of copolyester elastomer used in compositions of the invention are the reaction product of a long chain glycol with terephthalic acid or isophthalic acid. The long chain glycols are poly(alkylene oxide) glycols having terminal (or as nearly terminal as possible) hydroxyl groups and hydroxyl numbers between about l8 and about 280 as determined in accordance with ASTM test method E-222. Corresponding number average molecular weights are between about 400 and about 6,000. Number average molecular weight for a particular glycol may be calculated by dividing the hydroxyl number into ll2,200. Glycols used in the invention preferably have a number average molecular weight between about 400 and about 6,000 and carbon to oxygen ratio of between about 2.0 to l and about 4.3 to l. Representative long chain glycols available for use in making product of the invention include poly(ethylene oxide) glycol, poly(l,2- and l,3-propylene oxide) glycol, and poly(tetramethylene oxide) glycol. Poly(tetramethylene oxide) glycol is a particularly preferred glycol for long chain ester units of the invention.

Short chain units of polyester elastomers used in compositions of the invention may be made by reacting l,4-butanediol, l,4-butenediol or a mixture thereof with terephthalic acid or isophthalic acid. In preferred embodiments l,4-butenediol is used in amounts between about l0 and about 40%, more usually between about 20 and about 30%, based on the total of l,4-butanediol and l,4-butenediol. In making both the long chain and short chain units of product of the invention, the use of terephthalic acid is generally preferred with the use of between about l and about 20% isophthalic acid based on the total of terephthalic acid and isophthalic acid

used being preferred when product of lower flexural modulus is desired.

The terms "terephthalic acid" and "isophthalic acid" as used herein are intended to include the condensation polymerization equivalent of such acids, i.e. their esters or ester-forming derivatives such as acid chlorides and anhydrides, or other derivatives which behave substantially like such acids in a polymerization reaction with a glycol. Dimethyl terephthalate and dimethyl isophthalate are for instance suitable starting materials for elastomers of the invention.

Copolyester elastomer for use in the invention can be made by conventional ester interchange reaction. A preferred procedure involves heating the dimethyl ester of terephthalic acid or of a mixture of terephthalic and isophthalic acids with a long chain glycol and a molar excess of a mixture of butanediol and butenediol in the presence of a catalyst at 150 - 260° C. followed by distilling off of methanol formed by the interchange. Heating is continued until methanol evolution is complete. Depending upon temperature, catalyst and glycol excess, the polymerization is complete within a few minutes to a few hours. This procedure results in the preparation of a low molecular weight pre-polymer which can be carried to a desired high molecular weight copolyester by distillation of the excess of short chain diol in a conventional polycondensation reaction. Additional ester interchange occurs during this distillation to increase the molecular weight and to randomize the arrangement of the copolyester units. Best results are usually obtained if this final distillation or polycondensation is run at less than 1 mm pressure and 220 - 255° C. for less than 2 hours in the presence of antioxidants. Most practical polymerization techniques rely upon ester interchange to complete the polymerization reaction. In order to avoid excessive hold time at high temperatures with possible irreversible thermal degradation, it is advantageous to employ a catalyst for ester interchange reactions. While a wide variety of catalysts can be used, organic titanates such as tetrabutyl or tetraisopropyl titanate used alone or in combination with magnesium or calcium acetates are preferred. Complex titanates, such as derived from alkali or alkaline earth metal alkoxides and titanate esters are also very effective. Inorganic titanates, such as lanthanum titanate, calcium acetate/antimony trioxide mixtures and lithium and magnesium alkoxides are representative of other catalysts which can be used.

Prepolymers for copolyester elastomer used in the invention can also be prepared by a number of alternate esterification or ester interchange processes. For example, the long chain glycol can be reacted with a high or low molecular weight short chain ester homopolymer or copolymer in the presence of catalyst until randomization occurs. The short chain ester homopolymer or copolymer can be prepared by ester interchange from either the dimethyl esters and low molecular weight diols, as above, or from the free acids with the diol acetates. Alternatively, the short chain ester copolymer can be prepared by direct esterification from appropriate acids, anhydrides or acid chlorides, for example, with diols or by other processes such as reaction of the acids with cyclic ethers or carbonates. Obviously the prepolymer might also be prepared by running these processes in the presence of the long chain glycol.

Segmented copolyester elastomer is present in compositions of the invention in amounts between about 10 and about 90 wt. % based on the total of poly($C_2$-$C_4$ alkylene terephthalate) and elastomer, preferably in amounts between about 15 wt. % and about 70 wt. % on the same basis.

Compositions of the invention may be formed by blending PBT, copolyester elastomer and core-shell polymer to obtain a blend having the desired properties. Blending may be done in any suitable manner with extrusion blending being preferred. Suitable devices for the blending include single screw extruders, twin screw extruders, internal mixers such as the Banbury Mixer, heated rubber mills (electric or oil heat) or Farrell continuous mixers. Injection molding equipment can also be used to accomplish blending just prior to molding, but care must be taken to provide sufficient time and agitation to insure uniform blending prior to molding.

Molding compositions of the invention may also contain suitable flame retardant additives in amounts up to about 25 wt. % based on the total of poly($C_2$-$C_4$ alkylene terephthalate), segmented copolyester elastomer and core-shell type impact modifier and may contain relatively minor amounts of other material which do not unduly effect the desired characteristics of the finished product. Such additional materials may, depending upon the particular compositions employed and product desired, include for instance nucleating agents, stabilizers, lubricants, colorants, mold release agents, blowing agents etc. Where present such additional materials normally comprise no more than about 10 wt. % of the total composition.

If desired, compositions of the invention may include thermally stable reinforcing fibers or fillers conventionally used in the production of PBT molding compositions. Glass fibers treated with silane or other coupling agent are preferred reinforcing fibers. Such reinforcing fibers or fillers will normally be used in amounts between about 3 and about 50 wt. % based on total molding composition and may be incorporated into the molding composition in any suitable manner such as by separate extrusion blending with the previously formed composition or incorporating into the composition during injection molding of products from the composition of the invention. Suitable reinforcing fillers include for instance mica, wollastonite, clay and talc. Combination of fibers and filler may also be used. The combination of glass fibers and mica filler is especially useful. Calcium carbonate, clay and surface treated clay are preferred fillers.

In especially preferred embodiments, compositions of the invention include up to about 40 wt. %, preferably between about 10 wt. % and about 35 wt. %, based on the total of poly($C_2$-$C_4$ alkylene terephthalate), copolyester elastomer and impact modifier of flame retardant which is either (i) a low molecular weight polymer of a carbonate of a halogenated dihydric phenol, said polymer containing from 2 to 10 repeating units of the formula

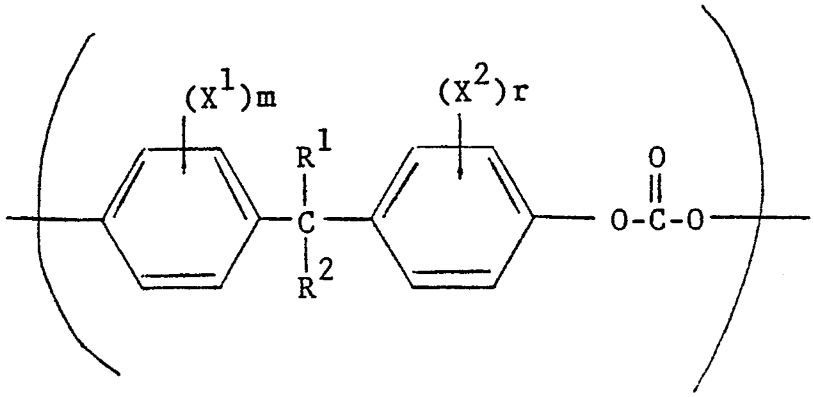

Formula III

wherein $R^1$ and $R^2$ are hydrogen, lower alkyl, or phenyl, $X^1$ and $X^2$ are bromo and m and r are from l to 4, said lower molecular weight polymer (i) being terminated with halogenated aromatic substituents of the formulae:

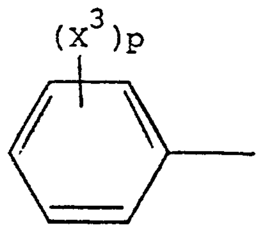

and

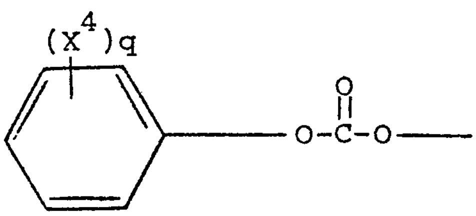

wherein $X^3$ and $X^4$ are bromo and p and q are each from l to 5, said polymer having low volatility when heated above about 200° C., and a softening point of less than about 300° C. or (ii) a combination of said polymer (i) and an inorganic or organic antimony-containing compound such as antimony oxide or oxychloride, phosphate, antimony caproate, etc. Especially preferred flame retardants of this type are described in greater detail in U.S. patent 3,855,277 the disclosure of which is incorporated herein by reference.

In a particularly preferred flame retardant the low molecular weight polymer has the formula

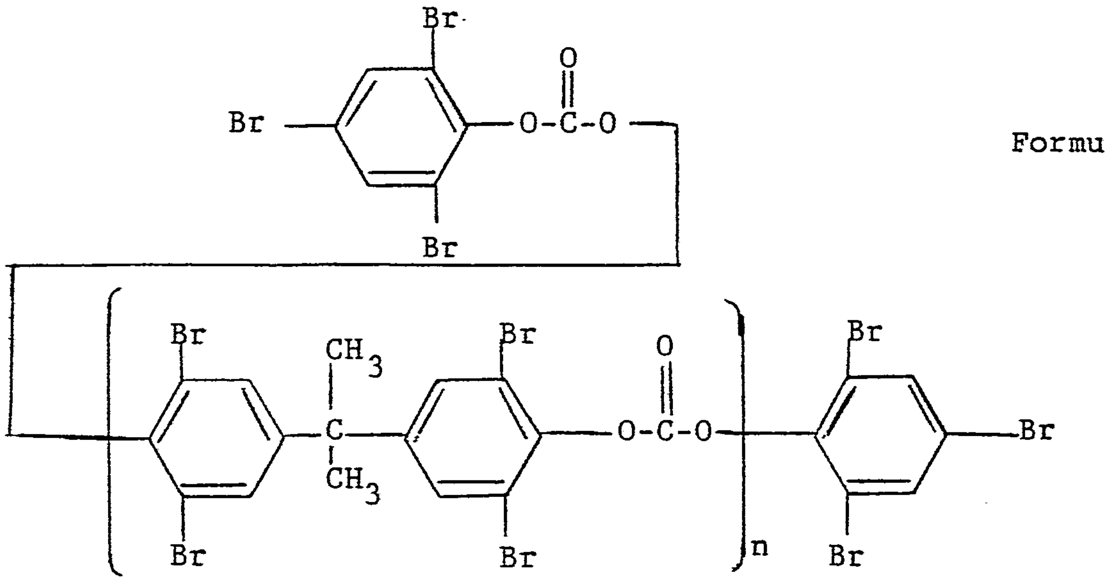

Formula IV

where n is an integer from about 3 to about 7.

Compositions of the invention have superior flexural moduli and impact strengths as compared with blends of polyalkylene terephthalate and segmented copolyester elastomer which do not contain the impact modifiers specified herein. This is especially surprising in view of the fact that the flexural moduli of the impact modifiers is very close to the flexural modulus of the elastomer component of the composition.

The following examples are intended to illustrate the invention without limiting the scope thereof.

As used herein the following terms have the meanings given below:

| Term | Description |
| --- | --- |
| PBT I | Polybutylene terephthalate having an intrinsic viscosity of about 0.6 deciliters per gram (dl/g) as measured in orthochlorophenol at 25°C. |
| PBT II | Polybutylene terephthalate having an intrinsic viscosity of about 0.8 dl/g as measured in orthochlorophenol at 25°C. |
| MBS I | Methacrylate-butadiene-styrene core-shell impact modifier having semi-rigid thermosetting outer shell and available from M & T Chemicals under the tradename Metablen C-223 |
| MBS II | Methacrylate-butadiene-styrene core-shell impact modifier having semi-rigid thermosetting outer shell and available from Rohm and Haas Company under the tradename Paraloid KM-653. |
| DMT | Dimethyl terephthalate |
| $B_1D$ | 1,4 butanediol |
| $B_2D$ | 1,4 butenediol |
| PTMEG | Poly(tetramethylene oxide) glycol number average molecular weight 1,000 |
| Naugard 445 | Trade name for α, α-dimethylbenzyl diphenylamine. |
| KM-330 | Acrylate core-shell polymer having rigid thermoplastic outer shell available from Rohm and Haas company under the tradename Paraloid KM-330. |
| TPT | Tetraisopropyl titanate catalyst |

The elastomer referred to in the following examples was segmented copolyester elastomer of the type described in U.S. patent 4,469,851 made from the following ingredients.

| Ingredient | Mols | Grams |
|---|---|---|
| DMT | 6.13 | 1189 |
| $B_1D$ | 4.98 | 448 |
| $B_2D$ | 2.34 | 206 |
| PTMEG | 0.65 | 650 |
| Naugard 445 | | 35 |
| TPT | | 1.3 |

In this elastomer about 75 wt. % of the D groups of formula (II) were derived from $B_1D$ and 25 wt. % were derived from $B_2D$. Short chain ester units made up about 62 wt. % of the total of long and short chain ester units. This elastomer and PBT used in the following examples were supplied in the form of pellets The compositions referred to below were extrusion blended on a l-l/2 inch Waldron-Hartig extruder (with barrel and die temperatures set at 250° C.) equipped with a single-stage barrier flighted screw tipped with a Maddock mixing segment. The extruder was run at about 90 RPM yielding a melt temperature of 227°-240° C and back pressure of 300-600 psi. The strands produced were water quenched and pelletized.

EXAMPLES l-l2

In order to evaluate the effectiveness of MBS modifier in modifying properties of blends of elastomer and PBT, the following compositions were blended and tested for flex modulus in accordance with ASTM D-790 and for notched izod impact strength at room temperature in accordance with ASTM D-256. The ingredients used and test results obtained are shown in Table I below. In Table I the notation "NB" indicates no break.

TABLE I

| Example No. | 1 | 2 | 3 | 4 | 5 | 6 |
|---|---|---|---|---|---|---|
| Ingredients (wt %) | | | | | | |
| PBT I | 60 | 50 | 50 | 40 | 40 | 30 |
| PBT II | | | | | | |
| Elastomer | 40 | 30 | 50 | 40 | 60 | 50 |
| MBS I | | 20 | | 20 | | 20 |
| MBS II | | | | | | |
| KM 330 | | | | | | |
| Notched Izod (RT) (ft-lb/in) | 1.6 | NB | 2.5 | NB | 3.5 | NB |
| Notched Izod (-40$^{o}$F.) (ft-lb/in) | .95 | 1.41 | 0.62 | 1.40 | 1.10 | 1.22 |
| Unnotched Izod (-40$^{o}$F.) (ft-lb/in) | 7.5 | NB | 10.4 | NB | 11.2 | NB |
| Flexural Modulus (psi) | 178,400 | 115,000 | 143,900 | 85,000 | 120,400 | 68,600 |

TABLE I CONT'D

| Example No. | 7 | 8 | 9 | 10 | 11 | 12 |
|---|---|---|---|---|---|---|
| Ingredients (wt %) | | | | | | |
| PBT I | 60 | 28.5 | 30 | | | |
| PBT II | | 9.5 | 10 | 50 | 50 | 50 |
| Elastomer | 20 | 57 | 50 | 30 | 30 | 30 |
| MBS I | 20 | 5 | 10 | 20 | | |
| MBS II | | | | | | 20 |
| KM 330 | | | | | 20 | |
| Notched Izod (RT) (ft-lb/in) | NB | NB | NB | NB | 4.3 | 8.7 |
| Notched Izod (-40°F.) (ft-lb/in) | 0.90 | | | | | |
| Unnotched Izod (-40°F.) (ft-lb/in) | NB | | | | | |
| Flexural Modulus (psi) | 151,000 | 55,700 | 94,700 | | | |

From the data presented in Table I it can be seen that the addition of MBS modifier to the PBT/elastomer mixtures resulted in an unexpected reduction of flexural modulus and increase of impact strength both at

room temperature and at low temperature. The reduction of flexural modulus is especially surprising since the flexural modulus of the MBS modifier and elastomer is substantially the same. With more particular reference to Table I, example 7, shows a decrease in flex modulus for a composition of the invention as compared to example I which is a similar composition but contains only PBT and elastomer. Examples 2 and 3 as well as examples 4 and 5 show similar results at different PBT levels. Examples l0-l2 illustrate use of different impact modifier and the remaining examples illustrate the affects of variations in compositions.

While the invention has been described above with respect to preferred embodiments thereof, it will be understood by those skilled in the art that various changes and modifications may be made without departing from the spirit or scope of the invention.

## Claims

l. Molding composition consisting essentially of:

(a) between about l0 wt. % and about 90 wt. % based on total composition of poly($C_2$-$C_4$ alkylene terephthalate) with at least about 50 wt. % of such poly($C_2$-$C_4$ alkylene terephthalate) being polybutylene terephthalate having an intrinsic viscosity between about 0.5 and about 2.0 dl/g;

(b) between about l0 wt. % and about 90 wt. % based on (a) and (b) of segmented thermoplastic copolyester elastomer which consists essentially of a multiplicity of recurring long chain ester units and short chain ester units joined head to tail through ester linkages, said long chain ester units being represented by the formula

$$-OGO-\overset{O}{\overset{\|}{C}}R\overset{O}{\overset{\|}{C}}- \quad \text{Formula I}$$

and said short chain ester units being represented by the formula

$$-ODO-\overset{O}{\overset{\|}{C}}R\overset{O}{\overset{\|}{C}}- \quad \text{Formula II}$$

where G is a divalent radical remaining after the removal of the terminal hydroxyl groups from a difunctional polyether glycol having a number average molecular weight in the range from about 400 to about 6,000, R is a hydrocarbon radical remaining after removal of the carboxyl groups from terephthalic acid or isophthalic acid, and D is a divalent radical remaining after removal of hydroxyl groups from l,4 butanediol or l,4 butenediol; provided that said short chain segments amount to between about 30 wt. % and about 85 wt. % of the copolyester; and

(c) between about 5 wt. % and about 45 wt. % based on (a), (b) and (c) of impact modifier consisting essentially of butadiene based core-shell polymer having a butadiene polymer core, wherein butadiene units account for at least 50 mole % of the total polymer and the outer shell consists essentially of crosslinked vinyl monomer.

2. Molding composition according to Claim l wherein polybutylene terephthalate comprises between about 20 wt. % and about 70 wt. % based on components (a), (b) and (c).

3. Molding composition according to Claim l wherein between about l0 % and about 40 % of the D groups represent divalent radicals remaining after removal of hydroxyl groups from l,4 butenediol.

4. Molding composition according to Claim l which includes up to about 40 wt. % based on components (a), (b) and (c) of flame retardant which is either:

(i) a low molecular weight polymer of a carbonate of a halogenated dihydric phenol, said polymer containing from 2 to l0 repeating units of the formula

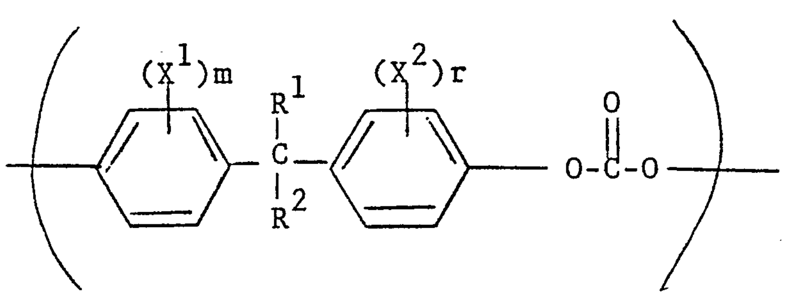

Formula III

wherein $R^1$ and $R^2$ are hydrogen, (lower) alkyl, or phenyl, $X^1$ and $X^2$ are bromo and m and r are from l to 4, said lower molecular weight polymer (i) being terminated with halogenated aromatic substituents of the formulae:

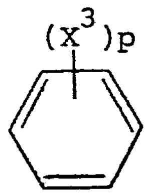

and

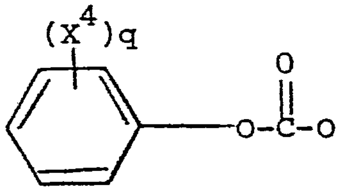

wherein $X^3$ and $X^4$ are bromo and p and q are each from l to 5, said polymer having low volatility when heated above about 200° C , and a softening point of less than about 300° C.; or

(ii) a combination of said polymer (i) and an inorganic or organic antimony-containing compound.

5. Molding composition according to Claim 4 in which the flame retardant is present in amounts between about l0 wt. % and about 35 wt. % based on components (a), (b) and (c).

6. Molding composition according to Claim 5 in which the flame retardant is of the formula

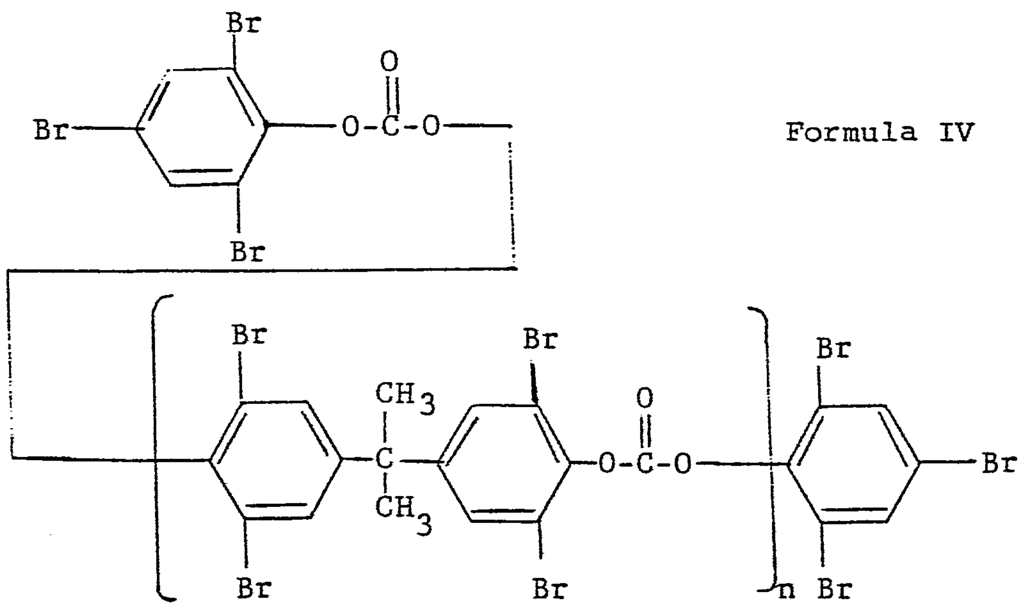

Formula IV

where n is an integer from about 3 to about 7.

7. Molding composition according to Claim l wherein the impact modifier is a three stage polymer having a butadiene based rubbery core, a second stage polymerized from styrene and a final stage polymerized from methylmethacrylate and l,3-butylene glycol dimethacrylate.

8. Molding composition according to Claim l wherein:

(a) polybutylene terephthalate is present in amounts between about 20 wt. % and about 70 wt. % based on the total of components (a), (b) and (c) of Claim l;

(b) copolyester elastomer component (b) of Claim l is present in amounts between about l0 wt. % and about 70 wt. % based on the total of components (a), (b) and (c) of Claim l; and

(c) between about l0 % and about 40 % of the D groups of formula ll represent divalent radicals remaining after removal of hydroxyl groups from l,4 butenediol.

9. Molding composition according to Claim 8 wherein the impact modifier is a three stage polymer having a butadiene based rubbery core, a second stage polymerized from styrene and a final stage polymerized from methylmethacrylate and l,3 butylene glycol dimethacrylate and is present in amounts between about 5 wt. % and about 35 wt. % based on the total of components (a), (b) and (c) of Claim l.

l0. Molding composition according to Claim 8 which includes between about 3 and about 50 wt. % of thermally stable reinforcing fibers or filler or mixture thereof.

11. Molding composition according to Claim 10 in which the thermally stable reinforcing fiber or filler is glass fibers.
12. Molding composition according to Claim 10 in which the reinforcing fibers or filler is a mixture of glass fibers and mica filler.
13. Molding composition of Claim 10 in which the reinforcing fiber or filler is talc.
14. Molding composition according to Claim 8 which includes about 3-50 wt. % of clay or surface treated clay, or calcium carbonate.